Europäisches Patentamt

European Patent Office

Office européen des brevets

(11) Veröffentlichungsnummer: **0 090 290**
A2

(12) # EUROPÄISCHE PATENTANMELDUNG

(21) Anmeldenummer: 83102698.4

(22) Anmeldetag: 18.03.83

(51) Int. Cl.³: **C 09 J 3/14,** C 09 J 3/16,
C 08 K 3/00, E 04 F 13/14,
C 04 B 39/04

(30) Priorität: 26.03.82 DE 3211176

(43) Veröffentlichungstag der Anmeldung: 05.10.83
Patentblatt 83/40

(84) Benannte Vertragsstaaten: AT BE CH DE FR LI NL

(71) Anmelder: Henkel Kommanditgesellschaft auf Aktien,
Postfach 1100 Henkelstrasse 67,
D-4000 Düsseldorf 1 (DE)
Anmelder: Gebr. Knauf Westdeutsche Gipswerke, Am
Bahnhof 7, D-8715 Iphofen (DE)

(72) Erfinder: Krings, Hans, Haus-Gravener-Strasse 62,
D-4018 Langenfeld-Richrath (DE)
Erfinder: Seth, Harro, Weinbergstrasse 4, D-8715 Iphofen
(DE)
Erfinder: Poch, Wingolf, Dr., Wiesenweg 5,
D-8710 Kitzingen (DE)

(54) Verwendung von Schmelzklebstoffen zum Verbinden von Bauteilen.

(57) Verwendung von Schmelzklebstoffen zum Verbinden von Gipskartonplatten, wobei der Anteil an Füllstoff im Schmelzkleber zwischen 10 und 50 Gewichtsprozent, bezogen auf den thermoplastischen Anteil, beträgt und als Füllstoffe Calciumcarbonat, Anhydrit, Bariumcarbonat, Bariumsulfat oder Kaolin oder China-Clay und als thermoplastischer Anteil Vinylacetat-Ethylen-Mischpolymerisate oder Polyesterharze oder Polyamide sowie klebrig machende Naturharze oder synthetische Harze bevorzugt sind.

EP 0 090 290 A2

4000 Düsseldorf, den 14. Dezember 1982    Dr.SchOe/Ge

Henkel Kommanditgesellschaft auf Aktien
Henkelstraße 67
4000 Düsseldorf 13

Gebr. Knauf Westdeutsche Gipswerke
Am Bahnhof 7
8715 Iphofen


Patentanmeldung

D. 6352  EP


"Verwendung von Schmelzklebstoffen zum Verbinden von
Bauteilen"

---

Die vorliegende Erfindung betrifft die Verwendung von
Schmelzklebstoffen zum Verbinden von Gips-Bauteilen,
insbesondere von Gipskartonplatten.

Es ist seit langem bekannt und üblich, Bauteile aus Gips,
insbesondere auch Gipskartonplatten, mittels wäßriger
Mörtelmasse zu verbinden bzw. die nach der Montage der
Bauteile zu Wand- oder Deckenflächen noch sichtbare Fuge
zu schließen. Diese Verbindungstechnik verlangt eine
entsprechende Vorbereitung der Gipskartonplatte und
Schleifen der mit der wäßrigen Mörtelmischung ausgefüllten Fuge. Diese kann selbstverständlich erst vorgenommen
werden, nachdem die Wasser enthaltende eingebrachte
Füllmasse durchgehärtet und getrocknet ist.

Aufgabe der vorliegenden Erfindung war es, ein Verfahren
zu finden, welches die schnelle und rationelle Verbindung
von plattenförmigen Bauteilen, insbesondere von Gipskartonplatten, noch weiter vereinfacht und auch unter
Baustellenverhältnissen durchführbar ist. Ein Ziel war
es, darüber hinaus eine Nacharbeitung der ausgefüllten
Fuge möglichst unnötig zu machen beziehungsweise sie
unmittelbar nach ihrer Herstellung zu gestatten,

...

0090290
HENKEL KGaA
Gebr. Knauf
Westdeutsche Gipswerke

ohne daß ein längerer Zwischenraum bis zur Erhärtung der eingebrachten Masse abgelaufen ist.

Erfindungsgemäß wird diese Aufgabe gelöst durch die Verwendung von Schmelzklebstoffen zum Verbinden von plattenförmigen Bauteilen, wobei der Anteil an Füllstoff im Schmelzklebstoff zwischen 10 und 50 Gewichtsprozent, bezogen auf den thermoplastischen Anteil, beträgt. Das erfindungsgemäße Verfahren soll insbesondere Verwendung finden zum dauerhaften Verbinden bzw. Verfugen von Gipskartonplatten, montiert als Wand- oder Deckenflächen.

Schmelzklebstoffe in der verschiedensten Zusammensetzung sind seit langem bekannt, und sie werden in vielen Bereichen der Technik mit Erfolg eingesetzt.

Schmelzklebstoffe zeichnen sich durch die Fähigkeit aus, unter der Einwirkung von Wärme zu verflüssigen, für einige Zeit klebefähig zu sein und nach Erreichen der Normaltemperatur zu erstarren und eine Verbindung zwischen den zu verklebenden Teilen zu bewirken. Dabei ist es notwendig, durch geeignete Auswahl der Rohstoffe einem dem jeweiligen Verwendungszweck angepaßten Schmelzklebstoff einzusetzen.

Als Basis für die erfindungsgemäß zu verwendenden Schmelzklebstoffe haben sich thermoplastische Kunststoffe bewährt, wie sie durch Polymerisation von Vinylacetat mit Ethylen oder Propylen hergestellt werden können. Die Mischpolymerisate, welche für den erfindungsgemäßen Zweck sich als geeignet erwiesen haben und im Handel erhältlich sind, weisen einen Gehalt von etwa 65 bis 75 % Ethylen und 35 bis 25 % Vinylacetat im Makromolekül

. . .

auf. Neben diesen können auch ataktisches Polypropylen oder niedermolekulare Polyethylene anstelle oder in Kombination mit den Copolymerisaten aus Vinylacetat und Ethylen eingesetzt werden. Auch können neben diesen sogenannte Polyester verwendet werden, wie sie durch Polykondensation aus mehrwertigen, insbesondere bifunktionellen Alkoholen und Dicarbonsäuren gewonnen werden können. Auch derartige Produkte sind im Handel erhältlich. Eine weitere Gruppe geeigneter thermoplastischer Kunststoffe sind die Polyamide, welche durch Ringöffnungspolymerisation von Caprolactam oder durch Kondensation von bifunktionellen Aminen mit Dicarbonsäuren wie Dimerfettsäuren, Adipinsäure oder den isomeren Phthalsäuren hergestellt werden. Die Eigenschaften dieser Produkte können durch Einbau von geeigneten monofunktionellen oder trifunktionellen Bestandteilen weitgehend variiert werden. Unter den bifunktionellen Alkoholen ist neben Ethylenglykol und niedermolekularen Polypropylenglykol auch die Verwendung von Polyethylenglykol mit Molekulargewichten zwischen etwa 400 und 1 000 möglich. Insbesondere bei Einsatz der letzteren ist die Oberfläche des Schmelzklebers besonders haftfähig für wäßrige Dispersionsfarben.

Neben den höhermolekularen Anteilen sollten die erfindungsgemäß einzusetzenden Klebstoffe noch sogenannte Klebrigmacher enthalten, wofür sowohl natürliche Harze (Balsam- oder Wurzelharze oder deren Derivate) als auch synthetische Kohlenwasserstoffharze geeignet sind. Bewährt hat sich die Verwendung von Cumaronharzen oder Dihydroabiethylalkohol oder den Estern dieses Alkohols.

Für den erfindungsgemäßen Zweck kommen als Füllstoffe insbesondere solche anorganischer Natur in Frage, wie etwa Calciumcarbonat, Anhydrit, Bariumcarbonat, Barium-

. . .

0090290
HENKEL KGaA

Gebr. Knauf
Westdeutsche Gipswerke

sulfat oder Gemische dieser Salze oder Kaolin oder China-Clay. Die Korngröße der einzusetzenden Füllstoffe soll etwa zwischen 1 bis 100 μ liegen. Über die Verwendung dieser Füllstoffe oder auch Pigmente hinaus ist noch der Einsatz von Titandioxid, Kieselsäure, Aluminiumoxid, Zirkonoxid sowie Bentonit meist in untergeordneter Menge möglich.

Schließlich sollten die einzusetzenden thermoplastischen Schmelzklebstoffe noch weitere Verarbeitungsmittel beziehungsweise Hilfsmittel enthalten. So ist es ratsam, gegen thermischen Abbau Hitzestabilisatoren zu verwenden, wie etwa substituierte Phenole.

Die Applikation der Schmelzkleber erfolgt mit geeigneten, im allgemeinen speziell für das Verfahren angepaßten Auftragsgeräten. Die Ausbildung der Schmelzkleber-Austrittsdüse, des Nachglätters usw., muß sowohl die Verbindung der Fugenflanken als auch eine Plane, an die Bauteiloberflächen angeglichene Schmelzkleber-Oberfläche im Stoßbereich der Platten und über den Befestigungsmitteln, z.B. Schraubenköpfen, erzielen lassen. Es ist auch möglich, den Schmelzkleber in den zu verklebenden Flächenbereich aufzubringen und erstarren zu lassen. Die eigentliche Verbindung bzw. Verklebung erfolgt dann in der Weise, daß unmittelbar vor oder nach dem Zusammenfügen der plattenförmigen Bauteile der Kleber durch Erwärmen, beispielsweise mittels heißer Luft, aktiviert wird.

. . .

Gebr. Knauf
Westdeutsche Gipswerke

## Beispiel

Zur Verbindung von 2 Gipskartonplatten, die mit den
kartonummantelten Längskanten aneinander gestoßen
waren, wurde ein Schmelzkleber verwendet, der folgende
Zusammensetzung hatte:

| | | |
|---|---|---|
| 400 | g | Ethylen-Vinylacetat-Mischpolymerisat (etwa 69 % Ethylen) |
| 275 | g | Cumaron-Harz |
| 300 | g | Bariumsulfat |
| 20 | g | Calciumcarbonat |
| 3 | g | Titandioxid |
| 2 | g | Di-(tert.-butyl)-kresol |

Unmittelbar nach Erkalten des Schmelzklebers wurde die
Fuge mit einer weiß-pigmentierten Dispersionsfarbe
überstrichen.
Auch ein Überspachteln der Fuge zum gegebenenfalls
erforderlichen Ausgleichen geringer Unebenheiten mit
zum Beispiel einem dispersionsgebundenen Fugenfüller
kann sofort nach Erkalten der Schmelzkleberverbindung
durchgeführt werden.

0090290

HENKEL KGaA

Gebr. Knauf
Westdeutsche Gipswerke

## Patentansprüche

1. Verwendung von Schmelzklebstoffen zum Verbinden von plattenförmigen Bauteilen, wobei der Anteil an Füllstoff im Schmelzkleber zwischen 10 und 50 Gewichtsprozent, bezogen auf den thermoplastischen Anteil, beträgt.

2. Verwendung von Schmelzklebstoffen nach Anspruch 1, zum dauerhaften Verbinden von Gipskartonplatten.

3. Verwendung von Schmelzklebstoffen nach Ansprüchen 1 und 2, wobei der Schmelzklebstoff anorganische Füllstoffe, insbesondere Calciumcarbonat, Anhydrit, Bariumcarbonat, Bariumsulfat oder Gemische dieser Salze oder Kaolin oder China-Clay enthält.

4. Verwendung von Schmelzklebstoffen nach Ansprüchen 1 bis 3, wobei der thermoplastische Anteil aus Vinylacetat-Ethylen-Mischpolymerisaten und/oder Polyesterharzen und/oder Polyamiden sowie klebrig machenden Naturharzen und/oder synthetischen Harzen beziehungsweise deren Abkömmlingen besteht.